(19) Europäisches Patentamt

European Patent Office

Office européen des brevets

(11) **EP 0 613 232 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.6: **H02M 3/335**

(21) Anmeldenummer: **93102866.6**

(22) Anmeldetag: **24.02.1993**

(54) **Sperrwandler-Schaltnetzteil mit einem Halbleiterschaltelement geringer Spannungsfestigkeit**

Flyback converter power supply with a semi-conductor switch of low resistance voltage

Convertisseur à récupération avec un interrupteur à semi-conducteur de base tenue en tension

(84) Benannte Vertragsstaaten:
**AT DE FR GB IT**

(43) Veröffentlichungstag der Anmeldung:
**31.08.1994 Patentblatt 1994/35**

(73) Patentinhaber: **SIEMENS AKTIENGESELLSCHAFT**
**80333 München (DE)**

(72) Erfinder: **Preller, Peter, Dipl.-Ing.**
**W-8000 München 60 (DE)**

(56) Entgegenhaltungen:
**EP-A- 474 471**   **GB-A- 2 185 357**
**US-A- 4 959 764**   **US-A- 5 111 372**

## Beschreibung

Die Erfindung betrifft ein Sperrwandler-Schaltnetzteil nach dem Oberbegriff des Anspruchs 1.

An der Laststrecke des Halbleiterschaltelementes eines typischen Sperrwandler-Schaltnetzteiles fällt im eingeschwungenen Zustand eine Spannung in der Größenordnung von etwa 700 V ab. Dies ist die sogenannte Sperrspannung in der Sperrphase des Sperrwandler-Schaltnetzteiles. Während des Abschaltens des Halbleiterschaltelementes erzeugt die in den Streuinduktivitäten des Transformators gespeicherte Energie eine Spannungsspitze, die, wie aus der DE 35 02 324 A1, bekannt ist, theoretisch unendlich groß werden kann und in der Praxis die erwähnte Sperrspannung deutlich übersteigt. Es ist deshalb notwendig, das Halbleiterschaltelement vor diesem Überschwingern zu schützen. Dies ist insbesondere dann erforderlich, wenn es sich bei dem Halbleiterschaltelement um einen MOS-Transistor handelt. Bei diesem Transistortyp steigen nämlich - unter der Voraussetzung vergleichbarer Chipfläche - der Einschaltwiderstand und die Durchlaßverluste mit der Spannungsfestigkeit des Halbleiterschaltelementes.

Zur Reduzierung der Überschwinger bzw. Abschaltspannungen ist es bekannt, parallel zum Halbleiterschaltelement eine sogenannte Snubber-Schaltung anzuordnen, die entweder aus einem einzelnen Kondensator oder aus einem RC-Glied mit einer parallel zum Widerstand geschalteten Diode - vgl. DE 34 05 833 A1 - besteht. Die mit diesen Maßnahmen erzielten Ergebnisse sind allerdings nicht in jedem Fall akzeptabel, weil die Kapazität des dort verwendeten Kondensators einen Kompromiß zwischen einander widersprechenden Anforderungen erfüllen muß. Mit zunehmender Kapazität nimmt nämlich einerseits die Dämpfungswirkung auf die Überschwinger zu, andererseits steigen die Transistorverluste im Einschaltmoment, weil der auf die Sperrspannung aufgeladenen Kondensator mehr Energie speichert.

Problematisch ist der Umstand, daß die Lastspannung des Halbleiterschaltelementes, d.h. die Drainspannung bei einem MOS-Transistor bzw. die Kollektorspannung bei einem Bipolartransistor, nach dem Entladen der im Transformator gespeicherten Energie nur bedingt auf Null zurückschwingt. Bei relativ großen Kapazitäten in den erwähnten Snubber-Schaltungen ist ein Zurückschwingen auf Null aber dringend notwendig, da im anderen Fall die im Kondensator noch gespeicherte Restenergie im Halbleiterschaltelement in Wärme umgewandelt wird. Dabei entstehen relativ große Stoßströme für das Halbleiterschaltelement, die dieses gefährdet .

Zur Lösung dieses Problems mußte bisher auf der Primärseite des Transformators während des Rückschwinges so viel Spannung induziert werden, daß die Energie des Kondensators in der Snubber-Schaltung zum Rückschwingen ausreicht. Dies machte Transistoren hoher Spannungsfestigkeit erforderlich, die nicht nur teuer sind, sondern auch wegen des größeren Durchschaltwiderstandes eine höhere Verlustleistung aufweisen.

Es ist daher gewünscht, in Sperrwandler-Schaltnetzteilen Transistoren mit geringerer Spannungsfestigkeit als Halbleiterschaltelemente einsetzen zu können.

Eine Lösung dieses Problems besteht in der in der DE 35 02 324 A1 beschriebenen Schaltungsmaßnahme. Diese Schaltungsmaßnahme sieht neben dem parallel zur Laststrecke des Halbleiterschaltelementes geschalteten Kondensator einen weiteren Kondensator vor, der sich auf der Lastseite befindet und zwar parallel zur Last mit einem Abgriff zwischen der Sekundärwicklung und dem Gleichrichter. Darüber hinaus ist ein ohmscher Widerstand und eine dazu parallele Diode zwischen dem Halbleiterschaltelement und der Primärwicklung eingefügt. Diese Schutzschaltung sorgt für eine starke Dämpfung der Abschaltüberschwinger, wobei beim Einschalten die Verluste im Halbleiterschaltelement und die Stromstärken in dem Primärkreis des Sperrwandler-Schaltnetzteiles relativ gering sind.

In der US-A-5 111 372 ist ein Flußwandler-Schaltnetzteil beschrieben, bei dem parallel zur Laststrecke des Schalttransistors ein erster Kondensator geschaltet ist und dazu parallel die Reihenschaltung eines weiteren Kondensators mit einem weiteren Schalttransistor. Bei Abschalten des Lasttransistors wird der weitere Kondensator über eine parasitäre Diode des weiteren Lasttransistors aufgeladen. Während der Sperrphase des Lastschalttransistors wird dann der weitere Schalttransistor eingeschaltet und anschließend wieder ausgeschaltet. Dadurch wird ein verlustleistungsarmes Schalten des Lastschalttransistors erreicht.

Der Erfindung liegt die Aufgabe zugrunde, eine andere Möglichkeit anzugeben, mit der Halbleiterschaltelemente mit geringer Spannungsfestigkeit in Sperrwandler-Schaltnetzteilen eingesetzt werden können, ohne daß diese überhitzen.

Diese Aufgabe wird bei einem Sperrwandler-Schaltnetzteil der eingangs genannten Art durch die kennzeichnenden Merkmale des Patentanspruchs 1 gelöst.

Mit dieser Lösung erhöht sich die negative Rückschwingamplitude so stark, daß die Lastspannung stets die Null-Linie durchlaufen kann, bevor das Halbleiterschaltelement eingeschaltet wird. Auf diese Weise wird auch bei kleineren Lastspannungen, also kleineren Drain- bzw. Kollektor-Spannungen des Halbleiterschaltelementes, ein spannungsloses Schalten durch das Halbleiterschaltelement ermöglicht. Es können damit preisgünstigere Transistoren geringerer Spannungsfestigkeit eingesetzt sowie Kosten und Energie gespart werden.

Weiterbildungen der Erfindung sind Gegenstand der Unteransprüche.

Als kapazitive Einrichtung können entweder ein oder mehrere Kondensatoren oder aber eine bekannte RCD-Schaltung vorgesehen werden. Wesentlich bei der Erfindung ist lediglich, daß die Kapazität in der kapazitiven Einrichtung veränderbar ist, und zwar derart, daß die Kapazität dann kleiner gewählt wird, wenn die an der Laststrecke des Halbleitterschaltelementes abfallende Spannung kleiner als die zu schaltende Gleichspannung ist. Ist die abfallende Spannung dagegen größer als die zu schaltende Spannung, so wird die Kapazität der kapazitiven Einrichtung wieder auf den ursprünglichen Wert erhöht. Es hat sich dabei als zweckmäßig erwiesen, die Kapazität so auszubilden, daß die Kapazität zwischen zwei unterschiedlichen Werten, nämlich einem größeren und einem kleineren Wert, umschaltbar ist.

Dies kann beispielsweise dadurch erfolgen, daß die kapazitive Einrichtung zwei in Reihe geschaltete Kondensatoren aufweist, und einer dieser Kondensatoren über eine steuerbare Schalteinrichtung nach Maßgabe eines Steuersignales kurzschließbar ist. Die steuerbare Schalteinrichtung wird dann vom Steuersignal immer dann eingeschaltet und dadurch der eine Kondensator kurzgeschlossen und somit die Kapazität der kapazitiven Einrichtung erhöht, wenn die an der Laststrecke des Halbleiterschaltelementes abfallende Spannung größer als die zu schaltende Gleichspannung ist.

Eine andere Ausführungsform der Erfindung sieht vor, daß die kapazitive Einrichtung zwei oder mehrere parallel zueinander angeordnete Kondensatoren aufweist, an denen mindestens ein Kondensator in Reihe zu einer Schalteinrichtung liegt. Dies hat den Vorteil, daß dadurch an der Schalteinrichtung eine geringere Spannung anliegt, die geschaltet werden muß. Es können daher Schalter mit geringerer Spannungsfestigkeit eingesetzt werden. Diese Schalteinrichtung wird nach Maßgabe eines Steuersignales immer dann eingeschaltet und somit die Kapazität der kapazitiven Einrichtung erhöht, wenn die an der Laststrecke des Halbleiterschaltelementes abfallende Spannung größer als die zu schaltende Gleichspannung ist.

In der Erfindung wird das Steuersignal aus einer Zusatzwicklung vom Transformator gewonnen, die beispielsweise aus ein bis zwei Windungen besteht und zur Primärwicklung gegensinnig gepolt ist. Es kann jedoch auch eine bereits am Transformator vorhandene Wicklung benutzt werden, sofern sie den benötigten Polungssinn aufweist.

Die Erfindung wird im folgenden anhand von elf Figuren beispielhaft näher erläutert. Es zeigen:

FIG 1 einen Ausschnitt der Schaltung eines bekannten Sperrwandler-Schaltnetzteiles, bei dem als Snubberschaltung ein Kondensator parallel zum Halbleiterschaltelement geschaltet ist.

FIG 2 eine Darstellung wie in FIG 1, bei der als Snubberschaltung eine RCD-Beschaltung vorgesehen ist.

FIG 3 den zeitlichen Verlauf der an der Laststrecke des Halbleiterschaltelementes in den FIG 1 bzw. 2 abfallenden Spannung im Schaltbetrieb.

FIG 4 einen Ausschnitt eines ersten Ausführungsbeispieles einer erfindungsgemäßen Schaltungsanordnung eines Sperrwandler-Schaltnetzteiles, bei dem eine Kapazität parallel zum Halbleiterschaltelement geschaltet und diese Kapazität veränderbar ist.

FIG 5 ein zweites Ausführungsbeispiel einer erfindungsgemäßen Schaltungsanordnung mit einer RCD-Beschaltung als Snubberschaltung, bei der die Kapazität veränderbar ist.

FIG 6 ein drittes Ausführungsbeispiel eines erfindungsgemäßen Sperrwandler-Schaltnetzteiles, bei dem zwei Kondensatoren in Reihe zum Halbleiterschaltelement geschaltet sind und einer dieser Kondensatoren durch eine Schalteinrichtung überbrückbar ist.

FIG 7 eine Darstellung ähnlich zu FIG 6, bei der als Snubberschaltung eine RCD-Schaltung vorgesehen ist, die in ihrer Kapazität veränderbar ist.

FIG 8 den zeitlichen Verlauf der in den FIG 4 bis 7 gezeigten abfallenden Lastspannung.

FIG 9 ein komplettes Schaltbild eines Sperrwandler-Schaltnetzteiles nach der Erfindung mit einem Bipolar-Transistor als Schalteinrichtung zum Verändern der Kapazität der kapazitiven Einrichtung.

FIG 10 die in dem in FIG 9 gezeigten Schaltnetzteil auftretenden Spannungen und Ströme.

FIG 11 ein zweites Ausführungsbeispiel eines Sperrwandler-Schaltnetzteiles nach der Erfindung mit einem MOS-Transistor als Schalteinrichtung zum Verändern der Kapazität der kapazitiven Einrichtung..

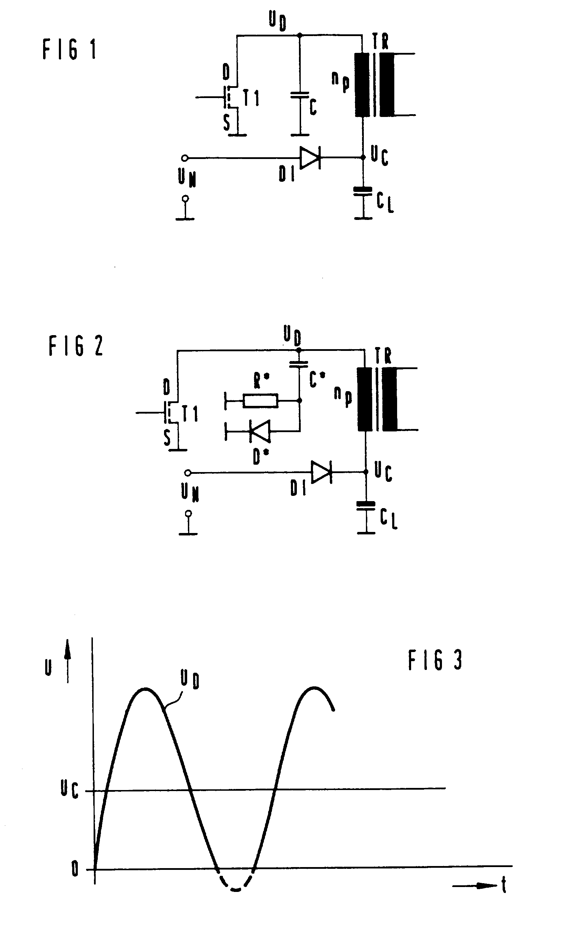

In FIG 1 ist ein Ausschnitt eines bekannten Sperrwandler-Schaltnetzteiles dargestellt, soweit es für das Verständnis der Erfindung erforderlich ist. Mit $U_N$ ist in der FIG eine gleichzurichtende Wechselspannung bezeichnet, die über eine der Einfachheit halber lediglich als Diode DI dargestellte Gleichrichtereinrichtung mit einem Glättungskondensator $C_L$ in Verbindung steht. Der Glättungskondensator $C_L$ liegt dabei zwischen dem Katodenanschluß an der Diode DI und Bezugspotential. An dem Verbindungspunkt der Diode DI und dem Glättungskondensator $C_L$ ist eine Gleichspannung $U_C$ abgreifbar. Der Katodenanschluß der Diode DI ist über eine Primärwicklung $n_P$ eines Transformators TR mit der Laststrecke eines Halbleiterschaltelementes T1 in Verbindung. Im vorliegenden Beispiel ist als das Halbleiterschaltelement T1 ein MOS-Transistor vorgesehen, dessen Sourceanschluß S auf Bezugspotential liegt und dessen Drainanschluß D mit einem zweiten Anschluß der Primärwicklung $n_P$ in Verbindung steht. Nach Maßgabe einer in der FIG 1 nicht dargestellten Steuerschaltung schaltet das Halbleiter-schaltelement T1 die gleichgerichtete Spannung $U_C$ pulsweitenmoduliert an die Primärwicklung $n_P$ des Transformators TR. Zur Dämpfung von dabei auftretenden Überschwingern ist es bekannt, parallel zur Laststrecke D, S des Halbleiterschaltelementes T1 eine sogenannte Snubberschaltung zu schalten. In diesem Ausführungsbeispiel ist als Snubberschaltung lediglich ein Kondensator C vorgesehen, der parallel zur Laststrecke D, S des Halbleiter-

schaltelementes T1 geschaltet ist.Dieser Kondensator C kann beispielsweise eine Kapazität von 100 pF bis 10 nF betragen.

In FIG 2 ist der Ausschnitt einer weiteren bekannten Schaltungsanordnung eines Sperrwandler-Schaltnetzteiles dargestellt, das sich von der Schaltung in FIG 1 lediglich dadurch unterscheidet, daß als Snubberschaltung jetzt nicht nur ein parallel geschalteter Kondensator, sondern eine RCD-Beschaltung vorgesehen ist. Diese RCD-Beschaltung weist eine Serienschaltung eines Kondensators C* mit einem Widerstand R* auf, wobei der Widerstand R* mit einem Anschluß auf Bezugspotential liegt, während ein gegenüberliegender Anschluß mit einem Anschluß des Kondensators C* verbunden ist. Ein zweiter Anschluß dieses Kondensators C* ist an einen Verbindungspunkt der Primärwicklung $n_P$ des Transformators TR und des Drainanschlusses des Halbleiter-Schaltelementes T1 angeschlossen. Der Kondensator C* kann wieder eine Kapazität von 100 pF bis 10nF betragen, der Widerstand R* ist niederohmig (ungefähr 2 bis 20 Ohm, die Diode D* muß nur entsprechend spannungsfest sein.

Die bekannten Schaltungsanordnungen in FIG 1 und FIG 2 sind bisher bei Sperrwandler-Schaltnetzteilen zur Vermeidung von Überschwingern bzw. zu deren Dämpfung eingesetzt worden. Deren Funktionsweise stellt sich so dar. Durch die Parallelkapazität C bzw. die Kapazität C* in der RCD-Beschaltung und eine Primärinduktivität der Primärwicklung $n_P$ des Transformators TR bedingt, führt die Lastspannung $U_D$ nach einem Ein- und Abschalten des Halbleiterschaltelementes T1 eine Schwingung aus, wie sie in FIG 3 dargestellt ist. Es ist zu erkennen, daß der Scheitelwert der am Halbleiterschaltelement T1 abfallenden Spannung $U_D$ mindestens doppelt so groß sein muß, wie die zu schaltende Spannung $U_C$, wenn die Lastspannung $U_D$ nach dem Rückschwingen die Nullinie durchlaufen soll. Soll das Sperrwandler-Schaltnetzteil beispielsweise für Netzspannungen $U_N$ bis zu 265 V (Effektivwert) ausgelegt sein, so muß zur Erreichung eines Nulldurchganges der Lastspannung $U_D$ der Maximalwert von

$$U_D > U_N \cdot \sqrt{2} \cdot 2 = 750 \text{ V}$$

sein. Wird zusätzlich die Dämpfung und eine mögliche Sicherheitsreserve für das Halbleiterschaltelement T1 vorgesehen, so mußte bisher ein Halbleiterschaltelement T1 mit einer Spannungsfestigkeit von etwa 1000 V vorgesehen werden.

Gemäß der Erfindung wird dies vermieden, indem die Kapazität der kapazitiven Einrichtung mindestens von einem ersten Wert auf einen kleineren zweiten Wert veränderbar ist, wenn die an der Laststrecke D, S des Halbleiterschaltelementes T1 abfallende Spannung $U_D$ kleiner als die Gleichspannung $U_C$ ist, die geschaltet werden soll. Darüber hinaus ist es auch möglich, die Kapazität dann zu verändern, wenn die Spannung $U_D$ etwas größer oder etwas kleiner als die Spannung $U_C$ ist.

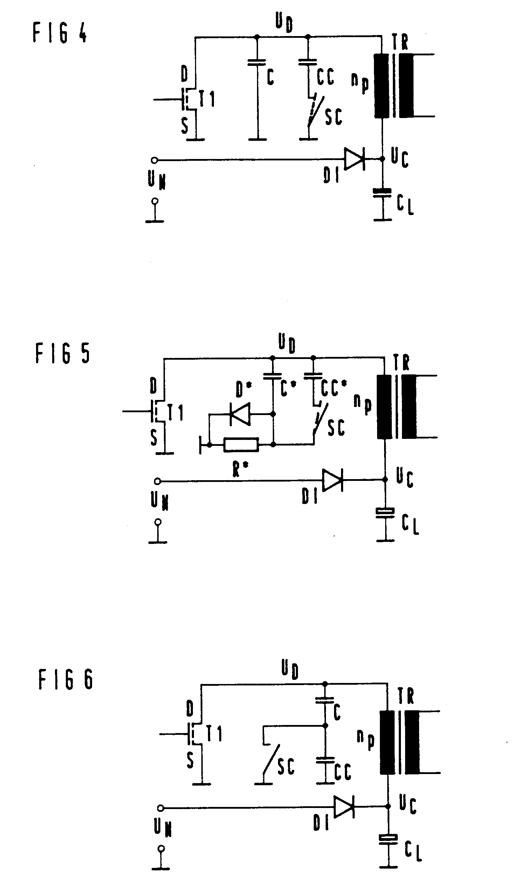

In den FIG 4 bis 7 sind Ausführungsbeispiele gezeigt, die hierfür geeignet sind. FIG 4 unterscheidet sich in der Darstellung von FIG 1 dadurch, daß zusätzlich parallel zur Laststrecke D,S des Halbleiterschaltelementes T1 ein weiterer Kondensator CC mit in Reihe geschalteter Schalteinrichtung SC geschaltet ist. Ist die Schalteinrichtung SC geschlossen, so liegt parallel zur Laststrecke D, S des Halbleiterschaltelementes T1 eine größere Kapazität an, als wenn die Schalteinrichtung SC offen wäre. Diese Schalteinrichtung SC wird erfindungsgemäß immer dann eingeschaltet, wenn die an der Laststrecke des Halbleiterschaltelementes T1 abfallende Spannung $U_D$ größer als die zu schaltende Spannung $U_C$ ist.

Die Schaltungsanordnung in FIG 5 unterscheidet sich von der Anordnung in FIG 4 dadurch, daß dort eine RCD-Beschaltung als Snubber-Schaltung vorgesehen ist. Hierfür ist die in FIG 2 gezeigte RCD-Beschaltung mit dem Kondensator C*, dem Widerstand R* mit parallelgeschalteter Diode D* durch die Reihenschaltung eines Kondensators CC* mit in Reihe geschalteter Schalteinrichtung SC erweitert, die zusammen parallel zum Kondensator C* liegen. Die Ansteuerung erfolgt unter der gleichen zeitlichen Bedingung, wie in der Schaltung von FIG 4, d. h. die Schalteinrichtung SC wird dann geschlossen, wenn die an der Laststrecke D, S des Halbleiterschaltelementes T1 abfallende Spannung $U_D$ größer als die zu schaltende Gleichspannung $U_C$ ist.

FIG 6 zeigt eine dritte mögliche Ausführungsform der erfindungsgemäßen Schaltungsanordnung. Im Gegensatz zur Darstellung in FIG 4 sind die beiden Kondensatoren C und CC nicht parallel zueinander, sondern in Serie zueinander geschaltet. Die Schalteinrichtung SC liegt parallel zu einem dieser Kondensatoren. Ist die Schalteinrichtung SC geschlossen, so ist die Gesamtkapazität dieser Kondensatoren C und CC größer als wenn die Schalteinrichtung SC geöffnet ist. Die Schalteinrichtung SC wird in der in FIG 6 gezeigten Schaltungsanordnung daher auch immer dann geschlossen, wenn die an der Laststrecke D, S des Halbleiterschaltelementes D1 abfallende Spannung $U_D$ größer als die zu schaltende Gleichspannung $U_C$ ist.

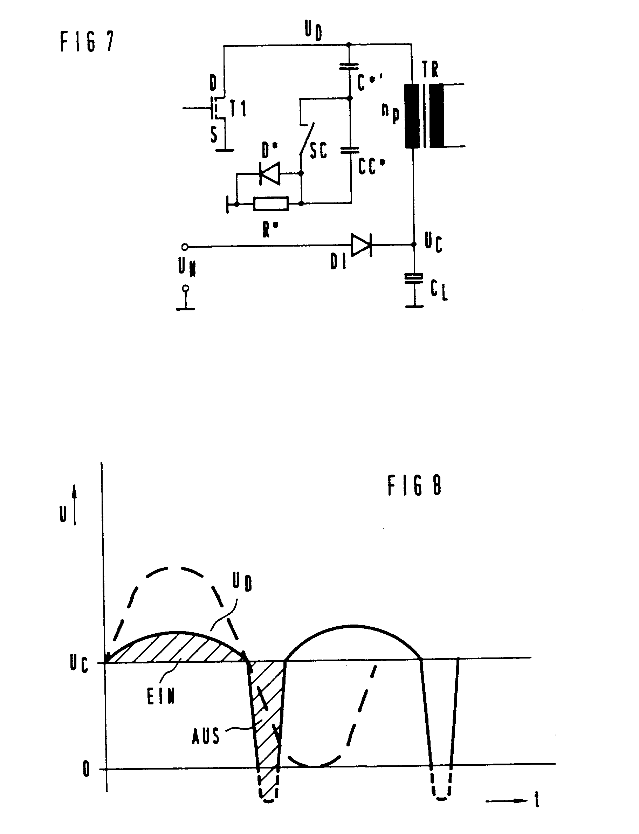

In FIG 7 wird als Snubberschaltung wieder eine RCD-Beschaltung mit dem Kondensator C*, der Diode D* und dem Widerstand R* vorgesehen. Im Gegensatz zur Darstellung in FIG 2, ist jedoch zwischen den Kondensator C* und der Parallelschaltung der Diode D* und dem Widerstand R* die Parallelschaltung eines Kondensators CC* mit der Schalteinrichtung SC geschaltet. Diese Schalteinrichtung SC wird unter den gleichen zeitlichen Bedingungen wie im Zusammenhang mit den Figuren 4, 5 und 6 bereits erläutert, ein- und ausgeschaltet.

Die Kondensatoren C und C* bzw. die geschalteten Kondensatoren CC und CC* sind folgendermaßen zu dimensionieren. Die geschalteten Kondensatoren CC und CC* sollten in ihrer Kapazität gleich groß oder größer als die nicht geschalteten Kondensatoren C und C* sein. Die Kondensatoren C und C* können dabei einer Kapazität in der Größenordnung von etwa 100 pF bis einige 100 nF aufweisen.

Wird die Schalteinrichtung SC in den Beispielen der Figuren 4 bis 7 erfindungsgemäß immer dann geschlossen, wenn die Lastspannung $U_D$ größer oder ungefähr größer als die zu schaltende Gleichspannung $U_C$ ist, so ergibt sich der in FIG 8 dargestellte zeitliche Verlauf der Lastspannung $U_D$. Die Spannung $U_D$ durchläuft die Null-linie, obwohl deren Scheitelwert nur geringfügig $U_C$ übersteigt. Immer wenn die Lastspannung $U_D$ kleiner als die zu schaltende Gleichspannung $U_C$ ist, wird die Schalteinrichtung SC geöffnet und die Schwingfrequenz des Sperrwandler-Schaltnetzteiles höher, da als Schwingkreiskapazität eine kleinere Kapazität wirksam ist. Es ist deutlich in FIG 8 zu erkennen, daß die Spannung $U_D$ die Nullinie durchläuft. dies ist erfindungsgemäß dann der Fall, wenn der zu schaltende Kondensator CC oder CC* genügend groß ist und das Windungsverhältnis von Primärwicklungen zu Sekundärwicklungen des Transformators TR geeignet gewählt ist. Wird der Kondensator C bzw. C* und der zu schaltende Kondensator CC bzw. CC* gleich groß gewählt, so muß das Windungsverhältnis von Primärwicklung $n_P$ zu Sekundärwicklung $1/\sqrt{2}$ sein, damit $U_D$ die Nullinie gerade erreicht und somit gewährleistet ist, daß das Halbleiterschaltelement T1 spannungsfrei einschalten kann. Dies gilt für eine gewollte Spannungsübersetzung von 1:1 zwischen Primär- und Sekundärseite des Transformators TR. Die in FIG 8 schraffierten Flächen für das Einschalten und Ausschalten sind gleich groß. Diese stellen das Spannungs-Zeitprodukt dar.

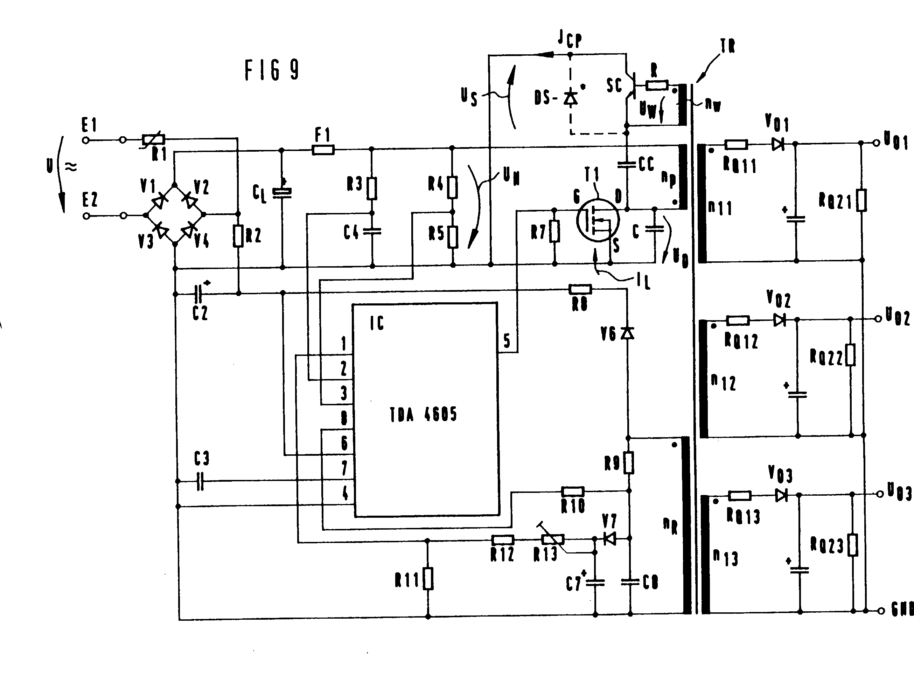

In FIG 9 ist ein Beispiel eines erfindungsgemäßen Sperrwandler-Schaltnetzteils im einzelnen dargestellt. Bis auf die im folgenden zu beschreibenden Unterschiede, ist dieses Sperrwandler-Schaltnetzteil beispielsweise in der Siemens-Produktinformation "Funktion und Anwendung des Sperrwandler-IC TDA 4605", Bestell-Nr. B111-B6090 zu entnehmen.

Zusätzlich zu dieser bekannten Schaltungsanordnung eines Sperrwandler-Schaltnetzteiles weist die in FIG 9 gezeigte Schaltung erfindungsgemäß eine weitere primärseitige Wicklung $n_W$ auf, die beispielsweise lediglich aus einer oder zwei Windungen besteht und gegensinnig zur Primärwicklung $n_P$ gepolt ist. Der jeweilige Polungssinn ist in FIG 9 durch einen Punkt an den Primär- bzw. Sekundärwicklungen dargestellt. Diese weitere Wicklung $n_W$ ist mit einem Anschluß über einen Widerstand R an einen Basisanschluß eines als Schalteinrichtung SC wirkenden Bipolartransistors angeschlossen. Ihr anderer Anschluß ist mit einem Emitteranschluß dieses Bipoltransistors und andererseits über einen Kondensator CC mit dem Drainanschluß des MOS-Transistors, der das Halbleiterschaltelement T1 ist, in Verbindung. Der Kollektoranschluß des als Schalteinrichtung SC wirkenden Bipolartransistors ist mit Bezugspotential in Verbindung. Die Schalteinrichtung SC besteht in diesem Ausführungsbeispiel also aus einem NPN-Transistor, einer zu dieser parallel geschalteten Inversdiode DS - die in den Transistor bereits integriert sein kann - und dem als Basisvorwiderstand wirkenden Widerstand R. Angesteuert wird dieser als Schalter wirkenden Transistor aus der weiteren Wicklung $n_W$ des Transformators TR. Anstelle dieser Wicklung $n_W$ kann auch eine bereits am Transformator TR vorhandene Wicklung benutzt werden, sofern sie den entsprechenden Polungssinn aufweist. Die Diode DS leitet den in Gegenrichtung durch den Kondensator CC fließenden Strom ab. Anstelle des NPN-Transistors für die Schalteinrichtung SC kann selbstverständlich auch ein PNP-Transistor verwendet werden, sofern dessen Basisanschluß an den anderen Anschluß der weiteren Wicklung $n_W$ angeschlossen ist.

Die Wirkungsweise dieses Sperrwandler-Schaltnetzteiles wird am besten anhand der zeitlichen Darstellung der in FIG 9 eingezeichneten Spannung und Ströme deutlich. Es bedeuten hierbei wieder $U_C$ die an die Primärwicklung $n_P$ vom Halbleiterschaltelement T1 zu schaltende Spannung, $U_D$ die am leiterschaltelement T1 abfallende Lastspannung, $U_W$ die Spannung an der weiteren Wicklung $n_W$ des Transformators TR $U_S$ eine an der Inversdiode DS der Schalteinrichtung SC abfallende Spannung, wobei deren Richtung durch den Pfeil in FIG 9 angezeigt ist, $I_L$ einen durch das Halbleiterschaltelement T1 fließenden Laststrom und $I_{CP}$ einen durch die Schalteinrichtung SC fließenden Strom.

Zum Zeitpunkt t0 wird das Halbleiterschaltelement T1 nach Maßgabe von Steuersignalen der Steuerschaltung IC, in der Darstellung von FIG 9 der integrierte Schaltkreis TDA 4605 von Siemens, abgeschaltet. Der Transformator TR ist aufgeladen und die Lastspannung $U_D$ steigt bis zum Zeitpunkt t1 wegen der im Transformator TR gespeicherten hohen Energie steil an und erreicht ein Potential, das der zu schaltenden Spannung UC entspricht. Die Spannung UW an der weiteren Wicklung nW des Transformators TR wird positiv und schaltet die Schalteinrichtung SC durch, wodurch der Kondensator CC parallel zum Kondensator C geschaltet wird und dadurch die Kapazität der kapazitiven Einrichtung der parallel zum Halbleiterschaltelement T1 geschalteten Snubberschaltung erhöht wird. Hierdurch verlangsamt sich der Anstieg der Lastspannung $U_D$ etwas. Im Zeitpunkt t2 bleibt die Lastspannung $U_D$ auf gleichem Niveu und der Transformator TR beginnt sich auf der Sekundärseite wieder zu entladen. Die Entladung ist im Zeitpunkt t3 abgeschlossen. Zwischen den Zeitpunkten t3 und t4 sinkt die Lastspannung $U_D$ zunächst langsam ab. Während dieser Zeit erhält der Transformator TR die nötige Rücklaufenergie aus dem Kondensator CC, der durch die Schalteinrichtung SC hinzugeschaltet wurde. Im Zeitpunkt t4 wird die Spannung $U_W$ negativ und die Schalteinrichtung SC abgeschaltet. Die Lastspannung $U_D$ sinkt beschleunigt ab und erreicht in Zeitpunkt t5 Null Volt. Zwischen den Zeitpunkten t5 und t6 fließt ein Inversstrom $I_L$ durch die Inversdiode DS. Da das Halbleiterschaltelement T1 zum Zeitpunkt t5 durch die Steuerschaltung IC - nach Maßgabe eines Nulldurchgangserkennungssignales - wieder eingeschaltet wird, bleibt die Lastspannung $U_D$ auf Null Volt und der Laststrom $I_L$ wird zum Zeitpunkt t6 wieder positiv. Der Transformator TR lädt sich auf, bis im neuen Zeitpunkt t0 das Halbleiterschaltelement T1 durch die Steuerschaltung IC wieder abgeschaltet wird und ein neuer Zyklus beginnt.

Im übrigen kann das Nulldurchgangserkennungssignal für die Steuerschaltung IC exakt aus der Lastspannung $U_D$ selbst abgeleitet werden, da die Lastspannung $U_D$ stets die Nullinie kreuzt.

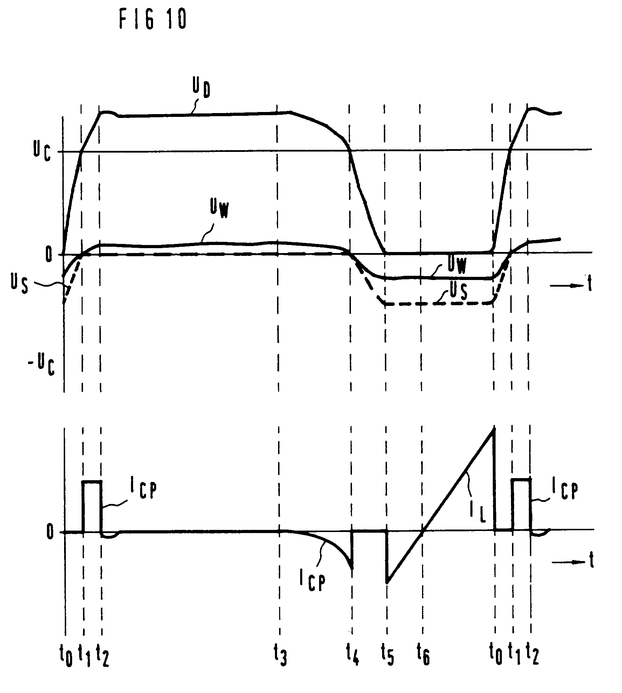

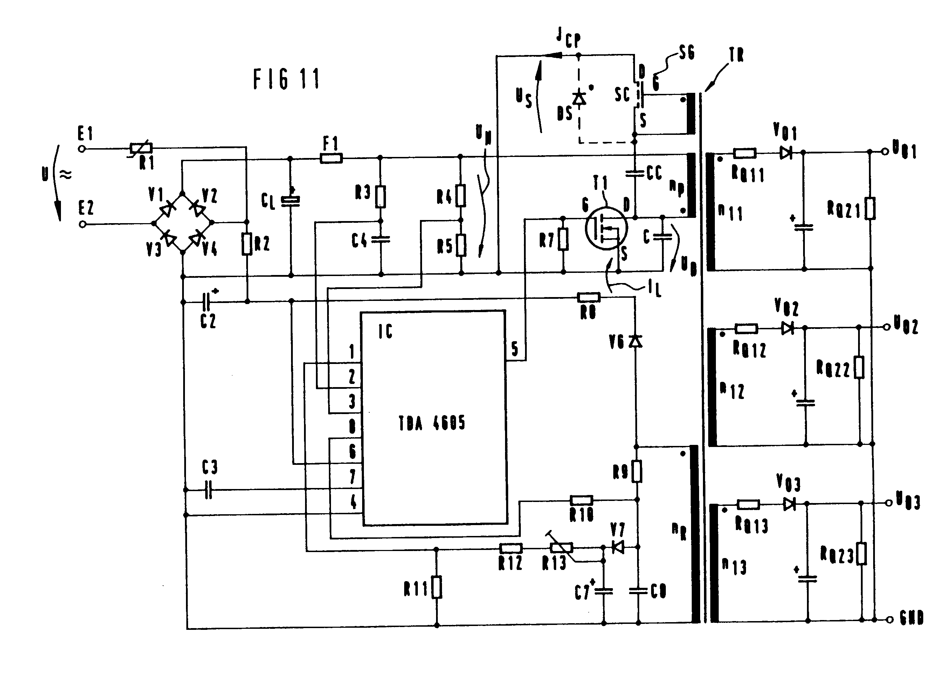

In FIG 11 ist ein weiteres Beispiel eines erfindungsgemäßen Schaltnetzteiles dargestellt. Diese Schaltungsanordnung unterscheidet sich von der in FIG 9 dargestellten lediglich dadurch, daß als Schalteinrichtung SC jetzt ein MOS-Transistor eingesetzt wird. Dieser MOS-Transistor ist mit seinem Gateanschluß G und mit seinem Sourceanschluß S an die weitere Wicklung $n_W$ in der in FIG 11 gezeigten Weise angeschlossen. Der Drainanschluß D des MOS-Transistors der Schalteinrichtung SC ist mit Bezugspotential verbunden und parallel zu dieser Schalteinrichtung SC wieder eine Inversdiode DS geschaltet. Darüber hinaus kann bei dieser Ausführungsform auf den Vorwiderstand R im Vergleich zum Bipolartransistor verzichtet werden. Im übrigen unterscheidet sich die Schaltungsanordnung von FIG 11 nicht von der Schaltungsanordnung in FIG 9. Die Verläufe der einzelnen Signale entsprechen auch dem Verlauf in FIG 10.

**Patentansprüche**

1. Sperrwandler-Schaltnetzteil mit einem eine Laststrecke (D,S) aufweisenden Halbleiterschaltelement (T1), das zum getakteten Anlegen einer Gleichspannung ($U_C$) an eine erste Primärwicklung ($n_p$) eines Transformators (TR) mit einem Anschluß der Primärwicklung ($n_p$) verbunden ist, an deren anderen Anschluß die Gleichspannung ($U_C$) anlegbar ist, mit einer Steuereinrichtung (IC) zum Ansteuern des Halbleiter-schaltelementes (T1) sowie mit einer parallel zur Laststrecke, (D, S) des Halbleiterschaltelementes (T1) geschalteten kapazitiven Einrichtung (C; D*, R*, C*)
**dadurch gekennzeichnet**, daß
die Kapazität der kapazitiven Einrichtung (C; D*, R*, C*) in einen ersten kleineren Wert und einen zweiten größeren Wert schaltbar ist, daß eine mit der ersten Primärwicklung ($n_p$) gekoppelte weitere Wicklung ($n_W$) vorgesehen ist, durch die veranlaßt wird, daß die Kapazität der kapazitiven Einrichtung (C; D*, R*, C*) vom ersten Wert auf den zweiten Wert geschaltet wird, wenn eine an der Laststrecke (D, S) des Halbleiter-schaltelementes (T1) abfallende Spannung ($U_D$) mindestens annähernd größer als die Gleichspannung ($U_C$) ist, und vom zweiten Wert auf den ersten Wert geschaltet wird, wenn die an der Laststrecke (D, S) des Halbleiterschaltelements (T1) abfallende Spannung ($U_C$) mindestens annähernd kleiner als die Gleichspannung ($U_C$) ist.

2. Sperrwandler-Schaltnetzteil nach Anspruch 1,
**dadurch gekennzeichnet,**
daß die kapazitive Einrichtung (C; D*, R*, C*) ein Kondensator (C) ist.

3. Sperrwandler-Schaltnetzteil nach Anspruch 1,
**dadurch gekennzeichnet,**
daß die kapazitive Einrichtung (C; D*, R*, C*) die Reihenschaltung eines Kondensators (C*) mit einer Parallelschaltung einer Diode (D*) und einem Widerstand (R*) ist.

4. Sperrwandler-Schaltnetzteil nach einem der Ansprüche 1 bis 3,
**dadurch gekennzeichnet,**
daß die kapazitive Einrichtung (C; D*, R*, C*) mindestens zwei in Reihe geschaltete Kondensatoren (C, CC) aufweist, und daß einer dieser Kondensatoren (CC) über eine von der weiteren Wicklung ($n_W$) gesteuerte Schalteinrichtung (SC) kurzschließbar ist.

5. Sperrwandler-Schaltnetzteil nach einem der Ansprüche 1 bis 4,
**dadurch gekennzeichnet,**
daß die kapazitive Einrichtung (C; D*, R*, C*) mindestens zwei zueinander parallel geschaltete Kondensatoren (C, CC) aufweist, wobei mindestens einer dieser Kondensatoren über eine von der weiteren Wicklung ($n_W$) gesteuerte zweite Schalteinrichtung (SC) abklemmbar ist.

**Claims**

1. Flyback converter switched-mode power supply with a semiconductor switching element (T1) which has a load section (D, S) and, for the purpose of the clocked appliance of a DC voltage ($U_C$), is connected to a first primary winding ($n_p$) of a transformer (TR) by means of one terminal of the primary winding ($n_p$), at whose other terminal the DC voltage ($U_C$) can be applied, with a control device (IC) for driving the semiconductor switching element (T1), and with a capacitive device (C; D*, R*, C*) connected in parallel with the load section (D, S) of the semiconductor switching element (T1), characterized in that the capacitance of the capacitive device (C; D*, R*, C*) can be switched to a first, smaller value and a second, larger value, in that provision is made of a further winding ($n_W$), which is coupled to the first primary winding ($n_p$) and which causes

the capacitance of the capacity device (C; D*, R*, C*) to be switched from the first value to the second value when a voltage (U$_D$) dropping across the load section (D, S) of the semiconductor switching element (T1) is at least approximately larger than the DC voltage (U$_C$), and to be switched from the second to the first value when the voltage (U$_C$) dropping across the load section (D, S) of the semiconductor switching element (T1) is at least approximately smaller than the DC voltage (U$_C$).

2. Flyback converter switched-mode power supply according to Claim 1, characterized in that the capacitive device (C; D*, R*, C*) is a capacitor (C).

3. Flyback converter switched-mode power supply according to Claim 1, characterized in that the capacitive device (C; D*, R*, C*) is a series circuit of a capacitor (C*) with a parallel circuit of a diode (D*) and a resistor (R*).

4. Flyback converter switched-mode power supply according to one of Claims 1 to 3, characterized in that the capacitive device (C; D*, R*, C*) has at least two series-connected capacitors (C, CC), and in that one of the capacitors (CC) can be short circuited via a switching device (SC) controlled by the further winding (n$_W$).

5. Flyback converter switched-mode power supply according to one of Claims 1 to 4, characterized in that the capacitive device (C; D*, R*, C*) has at least two capacitors (C, CC) connected in parallel with one another, it being possible to disconnect at least one of these capacitors via a second switching device (SC) controlled by the further winding (n$_W$).

**Revendications**

1. Alimentation à découpage à accumulation comportant un élément (T1) de commutation à semiconducteur, qui comporte une section (D, S) de charge qui est reliée, pour l'application cadencée d'une tension (U$_C$) continue à un premier enroulement primaire (n$_p$) d'un transformateur (TR), à une borne de l'enroulement primaire (n$_p$), à l'autre borne duquel peut être appliquée la tension continue (U$_C$), un dispositif (IC) de commande pour la commande de l'élément (T1) de commutation à semiconducteur ainsi qu'à un dispositif (C ; D*, R*, C*) capacitif branché en parallèle avec la section de charge (D, S) de l'élément (T1) de commutation à semiconducteur, caractérisée en ce que une première valeur petite et une seconde valeur plus grande de la capacité du dispositif capacitif (C; D*, R*, C*) peut être branchée, il est prévu un enroulement supplémentaire (n$_W$) couplé au premier enroulement primaire (n$_p$), qui fait que la capacité du dispositif capacitif (C ; D*, R*, C*) est branchée de la première valeur à la seconde valeur, lorsqu'une chute de tension (U$_D$) sur la section de charge (D, S) de l'élément (T1) de commutation à semiconducteur est plus grande, au moins approximativement, que la tension continue (U$_C$) et que la capacité du dispositif capacitif (C ; D*, R*, C*) passe de la seconde valeur à la première valeur, lorsque la chute de tension (U$_C$) sur la section (D, S) de charge de l'élément (T1) de commutation à semiconducteur est plus petite, au moins approximativement, que la tension continue (U$_C$).

2. Alimentation à découpage à accumulation suivant la revendication 1,
caractérisée en ce que
le dispositif capacitif (C ; D*, R*, C*) est un condensateur (C).

3. Alimentation à découpage à accumulation suivant la revendication 1,
caractérisée en ce que
le dispositif capacitif (C ; D*, R*, C*) est le circuit-série d'un transformateur (C*) et d'un circuit parallèle constitué d'une diode (D*) et d'une résistance (R*).

4. Alimentation à découpage à accumulation suivant l'une des revendications 1 à 3,
caractérisée en ce que
le dispositif capacitif (C ; D*, R*, C*) comporte au moins deux condensateurs (C, CC) branchés en série, et l'un de ces condensateurs (CC) peut être court-circuité par l'intermédiaire d'un dispositif (SC) d'interruption commandé par l'enroulement supplémentaire (n$_W$).

5. Alimentation à découpage à accumulation suivant l'une des revendications 1 à 4,
caractérisée en ce que
le dispositif capacitif (C ; D*, R*, C*) comporte au moins deux condensateurs (C, CC) branchés en parallèle entre eux, au moins l'un de ces condensateurs pouvant être débranché par l'intermédiaire d'un second dispositif (SC) d'interruption commandé par l'enroulement supplémentaire (n$_W$).

FIG 1

FIG 2

FIG 3

8

FIG 4

FIG 5

FIG 6

FIG 7

FIG 8

FIG 9

FIG 10

FIG 11

EP 0 613 232 B1